# FASCICULE DE BREVET EUROPEEN

(11) **EP 0 968 314 B1**
(45) Date de publication et mention de la délivrance du brevet: **07.08.2002**
(21) Numéro de dépôt: 98945373.3
(22) Date de dépôt: 24.09.1998
(51) Int. Cl.: C22C 19/07, C03B 37/095, C22F 1/10

(54) **ALLIAGE A BASE DE COBALT, ARTICLE REALISE A PARTIR DE L'ALLIAGE ET SON PROCEDE DE FABRICATION**
LEGIERUNG AUF KOBALT BASIS, WERKSTÜCK AUS DIESER LEGIERUNG UND VERFAHREN ZU IHRER HERSTELLUNG
COBALT BASED ALLOY, ARTICLE MADE FROM SAID ALLOY AND METHOD FOR MAKING SAME

(30) Priorité: 29.09.1997 FR 9712088
(43) Date de publication de la demande: 05.01.2000
(73) Titulaire: SAINT-GOBAIN ISOVER, 92400 Courbevoie (FR)
(72) Inventeur: BERTHOD, Patrice, F-54700 Pont-à-Mousson (FR); LIEBAUT, Christophe, F-71640 Mercurey (FR); BERNARD, Jean-Luc, F-60600 Giencourt (FR)
(74) Mandataire: Cardin, Elise
(86) Numéro de dépôt international: FR9802056
(87) Numéro de publication internationale: WO9916919

(56) Documents cités:
- EP-A- 0 186 797
- WO-A-88/09393
- US-A- 4 789 412
- PATENT ABSTRACTS OF JAPAN vol. 012, no. 252 (C-512), 15 juillet 1988 -& JP 63 038562 A (MITSUBISHI HEAVY IND LTD), 19 février 1988

## Description

La présente invention concerne un alliage à base de cobalt doué de résistance mécanique à haute température, en particulier en milieu oxydant ou corrosif tel que le verre fondu, utilisable notamment pour la réalisation d'articles pour l'élaboration et/ou la transformation à chaud du verre, tels que des organes de machines de fabrication de laine de verre par fibrage de verre en fusion.

La technique de fibrage consiste à laisser tomber continûment du verre liquide à l'intérieur d'un ensemble de pièces de révolution tournant à très grande vitesse de rotation autour de leur axe vertical. Arrêté dans sa chute initiale par le fond d'une pièce interne dite «panier», le verre se répand sous l'effet de la force centrifuge contre la paroi cylindrique percée de trous de cette même pièce. Ces trous laissent passer le verre qui, toujours sous l'effet de la force centrifuge, va se plaquer contre la paroi dite « bande » d'une pièce externe dite « assiette » qui est également percée de trous, ceux-ci étant plus petits que les précédents. Toujours sous l'effet de la force centrifuge, le verre traverse la bande de l'assiette de toutes parts sous la forme de filaments de verre fondu. Un brûleur annulaire situé au-dessus de l'extérieur de l'assiette, produisant un courant de gaz descendant longeant la paroi extérieure de la bande, dévie ces filaments vers le bas en les étirant. Ceux-ci se « solidifient » ensuite sous la forme de laine de verre. Les pièces appelées « panier » et « assiette » sont des outils de fibrage très sollicités thermiquement (chocs thermiques lors des démarrages et arrêts), mécaniquement (force centrifuge, érosion due au passage du verre) et chimiquement (oxydation et corrosion par le verre fondu, et par les gaz chauds sortant du brûleur pour l'assiette).

A titre indicatif la température opérationnelle est de l'ordre d'au moins 1000°C, pour que le verre présente une viscosité convenable.

Dans ces conditions, les principaux modes de détérioration de ces organes sont : la déformation par fluage à chaud des parois verticales, l'apparition de fissures horizontales ou verticales, l'usure par érosion des orifices de fibrage, qui nécessitent le remplacement pur et simple des organes. Leur matériau constitutif se doit donc de résister pendant un temps de production suffisamment long pour rester compatible avec les contraintes techniques et économiques du procédé.

Un matériau convenable est décrit dans le document FR-A-2 536 385. Il s'agit d'un superalliage à base de nickel renforcé par des carbures de chrome et de tungstène du type (W,Cr)₂₃C₆ présents sous deux formes : des carbures eutectiques répartis aux joints de grain en un réseau intergranulaire continu assurant la rigidité d'ensemble ; et des carbures fins (précipités secondaires) répartis d'une manière dense et homogène dans les grains de la matrice de nickel apportant une résistance au fluage intragranulaire.

La résistance à l'oxydation et à la corrosion à la température d'utilisation est assurée par la haute teneur en chrome de l'alliage qui forme une couche protectrice d'oxyde de chrome Cr₂O₃ à la surface de la pièce en contact avec le milieu oxydant. Une diffusion permanente du chrome vers le front de corrosion permet le renouvellement de la couche d'oxydes Cr₂O₃ en cas de déchirure ou autre dégradation.

Les températures de fonctionnement auxquelles cet alliage peut être utilisé avec succès sont cependant limitées à une valeur maximale de l'ordre de 1000 à 1050°C. Au-delà de cette température maximale, le matériau manifeste un manque de résistance, à la fois sur le plan mécanique avec l'apparition de fissures, et sur le plan de la corrosion, les fissures laissant pénétrer le milieu corrosif au sein du matériau.

Ce problème de dégradation rapide à température relativement élevée rend impossible l'utilisation de ce type d'alliage pour la fabrication de laine minérale à partir de verres très visqueux (tels que le basalte) que l'on ne peut pas fibrer à des températures inférieures à 1100°C.

Pour répondre à ce besoin d'un matériau présentant une bonne résistance mécanique, une bonne résistance à l'oxydation et à la corrosion par le verre à de très hautes températures, on a proposé d'utiliser des superalliages à base de cobalt, élément dont la résistance intrinsèque est supérieure à celle du nickel.

Ces alliages contiennent toujours du chrome pour la résistance à l'oxydation, ainsi que généralement du carbone et du tungstène pour obtenir un effet de renforcement par précipitation de carbures. Ils renferment également du nickel en solution solide qui stabilise le réseau cristallin du cobalt en cubique face centrée à toutes températures.

La seule présence de ces éléments ne suffit cependant pas pour atteindre les propriétés escomptées et de nombreuses tentatives ont été faites pour améliorer encore les propriétés des alliages à base de cobalt.

Ces tentatives reposent généralement sur l'addition d'éléments réactifs dans la composition de l'alliage.

Ainsi, FR-A-2 699 932 décrit un alliage à base de cobalt renfermant du rhénium, pouvant comprendre en outre notamment du niobium, de l'yttrium ou autres terres rares, du bore et/ou du hafnium. US-A-4 765 817 décrit un alliage à base de cobalt, chrome, nickel, tungstène comprenant également du bore et du hafnium. FR-A-2 576 914 utilise également du hafnium. EP-A-0 317 579 décrit un alliage renfermant du bore et exempt de hafnium, mais contenant de l'yttrium. US-A-3 933 484 concerne aussi un alliage renfermant du bore. US-A-3 984 240 et US-A-3 980 473 décrivent l'utilisation d'yttrium et dysprosium.

Ces éléments sont très coûteux et leur mauvais rendement d'incorporation oblige généralement à les surdoser lors de l'élaboration de l'alliage, ce qui augmente d'autant plus la part des matières premières dans le coût du matériau. A cet égard, on note que nombre de ces documents enseignent d'utiliser des teneurs élevées en chrome (de l'ordre de 35 à 36 %) également coûteux.

La présence de ces éléments de très forte réactivité impose de préparer l'alliage par la technologie délicate de fusion et coulée sous vide, avec un appareillage nécessitant un investissement important.

Par ailleurs, ces alliages présentent encore un risque marqué de fragilité à haute température en milieu corrosif tel que le verre fondu.

Il persiste donc le besoin d'un nouvel alliage ayant de bonnes propriétés mécaniques à haute température, en particulier en milieu oxydant et/ou corrosif tel que le verre fondu, qui soit en outre facile et relativement peu coûteux à élaborer.

Ce but, ainsi que d'autres qui apparaîtront par la suite, a été atteint par invention grâce à un alliage comprenant essentiellement les éléments suivants, les proportions étant indiquées en pourcentage pondéral de l'alliage :

| | |
|---|---|
| Cr | 26 à 34 % |
| Ni | 6 à 12 % |
| W | 4 à 8 % |
| Ta | 2 à 4 % |
| C | 0,2 à 0,5 % |
| Fe | moins de 3 % |
| Si | moins de 1 % |
| Mn | moins de 0,5 % |
| Zr | moins de 0,1 % |

le reste étant constitué par du cobalt et des impuretés inévitables, le rapport molaire du tantale par rapport au carbone étant de l'ordre de 0,4 à 1.

L'invention permet, grâce à une sélection très précise des proportions des éléments constitutifs de l'alliage, plus particulièrement carbone et tantale, d'optimiser le mode de renforcement de l'alliage. Ainsi on peut dire de façon générale que, bien que l'alliage selon l'invention présente une teneur en carbone relativement faible par rapport à l'art antérieur, le renforcement par précipitation de carbures a pu être amélioré en optimisant la répartition des carbures au sein du matériau.

La description qui va suivre donne plus de détails sur l'importance des constituants de l'alliage et de leurs proportions respectives.

Le cobalt, qui constitue la base de l'alliage selon l'invention, apporte de par son caractère réfractaire (point de fusion égal à 1495°C) une résistance mécanique intrinsèque à haute température de la matrice.

Le nickel, présent dans l'alliage sous forme d'une solution solide en tant qu'élément stabilisant la structure cristalline du cobalt, est utilisé dans la gamme de proportions habituelle de l'ordre de 6 à 12 %, avantageusement de 8 à 10 % en poids de l'alliage.

Le chrome contribue à la résistance mécanique intrinsèque de la matrice dans laquelle il est présent en partie en solution solide. Il contribue également au renforcement de l'alliage sous forme de carbures de type M₂₃C₆ avec M=(Cr,W) présents aux joints de grains, où ils empêchent le glissement grain sur grain, et à l'intérieur des grains sous forme d'une dispersion fine, où ils apportent une résistance au fluage intragranulaire. Sous toutes ses formes, le chrome contribue à la résistance à la corrosion en tant que précurseur d'oxyde de chrome formant une couche protectrice à la surface exposée au milieu oxydant. Une quantité minimale de chrome est nécessaire pour la formation et le maintien de cette couche protectrice. Une teneur en chrome trop élevée est cependant néfaste à la résistance mécanique et à la ténacité aux températures élevées, car elle conduit à une rigidité trop élevée et une aptitude à l'allongement sous contrainte trop faible incompatible avec les contraintes à haute température.

De façon générale, la teneur en chrome d'un alliage selon l'invention sera de 26 à 34 % en poids, de préférence de l'ordre de 28 à 32 % en poids, avantageusement d'environ 29 à 30 % en poids.

Le tungstène participe avec le chrome à la formation des carbures (Cr,W)₂₃C₆ intergranulaires et intragranulaires, mais se trouve aussi en solution solide dans la matrice dont cet atome lourd distord localement le réseau cristallin et gêne, voire bloque, la progression des dislocations quand le matériau est soumis à un effort mécanique. Une quantité minimale est souhaitable en liaison avec la teneur en chrome, pour favoriser les carbures de type M₂₃C₆ aux dépends des carbures de chrome Cr₇C₃ qui sont moins stables à haute température. Si cet élément a des effets bénéfiques sur la résistance mécanique, il présente néanmoins l'inconvénient de s'oxyder à haute température sous la forme de composés très volatils tels que WO₃. Une quantité trop élevée de tungstène dans l'alliage se traduit par un comportement en corrosion généralement insatisfaisant.

Un bon compromis est atteint selon l'invention avec une teneur en tungstène de l'ordre de 4 à 8 % en poids, de préférence de l'ordre de 5 à 7 % en poids, avantageusement de l'ordre de 5,5 à 6,5 % en poids.

Le tantale également présent en solution solide dans la matrice de cobalt apporte une contribution complémentaire à la résistance intrinsèque de la matrice, de façon similaire au tungstène. Il est capable en outre de former avec le carbone des carbures TaC présents aux joints de grains qui apportent un renforcement intergranulaire, en complément des carbures (Cr,W)₂₃C₆, en particulier à très haute température (par exemple de l'ordre de 1100°C) en raison de leur plus grande stabilité à haute température. La présence de tantale dans l'alliage selon l'invention a également un effet bénéfique sur la résistance à la corrosion.

La teneur minimale en tantale permettant d'obtenir la résistance désirée est de l'ordre de 2 %, la limite supérieure pouvant être choisie à environ 4 %. La quantité de tantale est avantageusement de l'ordre de 2,5 à 3,5 % en poids, notamment de 2,8 à 3,3 %.

Un autre constituant essentiel de l'alliage est le carbone, nécessaire à la formation des précipités de carbures métalliques. Les présents inventeurs ont mis en évidence l'influence de la teneur en carbone sur les propriétés de l'alliage.

De façon surprenante, alors que l'art intérieur enseigne d'utiliser le carbone en des teneurs relativement élevées, supérieures à 0,5 % en poids, une teneur en carbone plus faible donne d'excellentes propriétés mécaniques à haute température avec une très bonne résistance à l'oxydation et à la corrosion, malgré la proportion de carbures peu élevée qui en découle.

Selon l'invention, une teneur en carbone dans la gamme de 0,2 à 0,5 % en poids suffit pour obtenir une précipitation de carbures sufisamment dense pour un renfort mécanique intergranulaire et intragranulaire efficace. Il semblerait en particulier que les carbures intergranulaires, qui se répartissent de façon discontinue aux joints de grains de l'alliage, contribuent avantageusement aux propriétés mécaniques en s'opposant au fluage grain sur grain, ceci sans pour autant favoriser la propagation des fissures comme cela peut être le cas avec les carbures en général.

Avantageusement la teneur en carbone est de l'ordre de 0,3 à 0,45 % en poids, de préférence de l'ordre de 0,35 à 0,42 % en poids.

Selon l'invention, la relativement faible teneur en carbures est compensée d'une part par une répartition adaptée (discontinue) des carbures intergranulaires, et d'autre part par une «qualité» de carbures adaptée, à savoir la présence d'une certaine proportion de carbures de tantale aux joints de grains.

Les inventeurs ont découvert que la nature des carbures métalliques constituant les phases intergranulaires dépend du ratio atomique Ta/C et qu'un rapport molaire du tantale par rapport au carbone d'au moins environ 0,4 permet de précipiter aux joints de grains une proportion de TaC suffisante par rapport aux carbures M₂₃C₆.

La présence de carbures intergranulaires de type M₂₃C₆ riches en chrome reste souhaitable pour permettre une certaine diffusion de chromn le long des joints de grains et l'invention prévoit en conséquence un rapport molaire Ta/C de l'ordre de 0,4 à 1 (correspondant à un rapport pondéral de l'ordre de 6,0 à 15,1). De préférence, le rapport molaire Ta/C est de 0,45 à 0,9, très avantageusement de 0,48 à 0,8, notamment de l'ordre de 0,5 à 0,7 (rapport pondéral de préférence de 6,8 à 13,6, très avantageusement de 7,2 à 12,1 notamment de l'ordre de 7,5 à 10,6).

Ainsi, la résistance de l'alliage selon l'invention est optimisée par la présence de deux types de carbures aux propriétés complémentaires, tant du point de vue des propriétés mécaniques que de la résistance à la corrosion : (Cr,W)₂₃C₆, qui agit comme source de chrome et comme renfort mécanique jusqu'aux hautes températures ; et TaC qui reprend le renfort mécanique à très haute température et qui s'oppose dans des conditions oxydantes et/ou corrosives à la pénétration du milieu oxydant ou corrosif respectivement.

Les constituants indiqués ci-dessus suffisent à assurer les excellentes propriétés de l'alliage selon l'invention, sans recourir à des éléments d'addition coûteux ou du moins très réactifs nécessitant de grandes précautions lors de l'élaboration, tels que bore, yttrium ou autres terres rares, hafnium, rhénium... De tels éléments pourraient éventuellement être incorporés à l'alliage selon l'invention mais il ne s'agirait pas d'un mode de réalisation préféré puisqu'on perdrait les avantages liés au coût et à la facilité de fabrication.

L'alliage peut contenir néanmoins d'autres éléments constitutifs usuels ou impuretés inévitables. Il comporte en général :
- du silicium en tant que désoxydant du métal fondu lors de l'élaboration et du moulage de l'alliage, à raison de moins de 1 % en poids ;
- du manganèse également désoxydant, à raison de moins de 0,5 % en poids ;
- du zirconium en tant que piègeur d'éléments indésirables tels que le soufre ou le plomb, à raison de moins de 0,1 % en poids ;
- du fer, en une proportion pouvant aller jusqu'à 3 % en poids sans altération des propriétés du matériau ;
- la quantité cumulée des autres éléments introduits à titre d'impuretés avec les constituants essentiels de l'alliage (« impuretés inévitables») représente avantageusement moins de 1 % en poids de la composition de l'alliage.

Un exemple particulièrement préféré d'alliage selon l'invention a une composition dans laquelle les éléments sont dans des proportions de l'ordre de:

| | |
|---|---|
| Cr | 29 % |
| Ni | 8,5 % |
| C | 0,38 % |
| W | 5,7 % |
| Ta | 2,9 % |
| Fe | < 3 % |
| Si | < 1 % |
| Mn | < 0,5 % |
| Zr | <0,1 % |
| Impuretés | < 1 % |
| Co | reste |

de préférence exempt de B, Hf, Y, Dy, Re, autres terres rares.

Un autre alliage préféré selon l'invention a une composition dans laquelle les éléments sont dans des proportions de l'ordre de :

| | |
|---|---|
| Cr | 28 % |
| Ni | 8,5 % |
| C | 0,22% |
| W | 5,7 % |
| Ta | 3 % |
| Fe | < 3 % |
| Si | < 1 % |
| Mn | < 0,5 % |
| Zr | < 0,1 % |
| Impuretés | < 1 % |
| Co | reste |

de préférence exempt de B, Hf, Y, Dy, Re, autres terres rares.

L'alliage selon l'invention, lorsqu'il est exempt d'éléments hautement réactifs tels que B, Hf, les terres rares dont Y, Dy, Re, peut être mis en forme très facilement par fusion et coulée classique avec des moyens conventionnels, notamment par fusion inductive sous atmosphère au moins partiellement inerte et coulée en moule de sable.

Après coulée, la microstructure désirée peut avantageusement être atteinte par un traitement thermique en deux étapes :
- une phase de mise en solution comprenant un recuit à une température de 1100 à 1250°C, notamment de l'ordre de 1200°C, pendant une durée pouvant aller notamment de 1 à 4 heures, avantageusement de l'ordre de 2 heures ; et
- une phase de précipitation de carbures comprenant un recuit à une température de 850 à 1050°C, notamment de l'ordre de 1000°C, pendant une durée pouvant aller notamment de 5 à 20 heures, avantageusement de l'ordre de 10 heures.

L'invention a également pour objet un procédé de fabrication d'un article par fonderie à partir d'un alliage tel que décrit précédemment, avec les étapes du traitement thermique ci-dessus.

Le procédé peut comprendre au moins une étape de refroidissement, après la coulée et/ou après la première phase de traitement thermique, ainsi qu'à l'issue du traitement thermique.

Les refroidissements intermédiaires et/ou final peuvent se faire par exemple par refroidissement à l'air, notamment avec un retour à la température ambiante.

L'alliage selon l'invention peut être utilisé pour fabriquer toutes sortes de pièces sollicitées mécaniquement à haute température et/ou amenées à travailler en milieu oxydant ou corrosif. L'invention a encore pour objets de tels articles fabriqués à partir d'un alliage tel que décrit précédemment, notamment par fonderie.

Parmi de telles applications on peut citer notamment la fabrication d'articles utilisables pour l'élaboration ou la transformation à chaud du verre, par exemple des assiettes de fibrage pour la fabrication de laine minérale.

La remarquable résistance mécanique à haute température en milieu corrosif de l'alliage selon l'invention permet d'augmenter très sensiblement la durée de vie des outillages de mise en forme du verre en fusion.

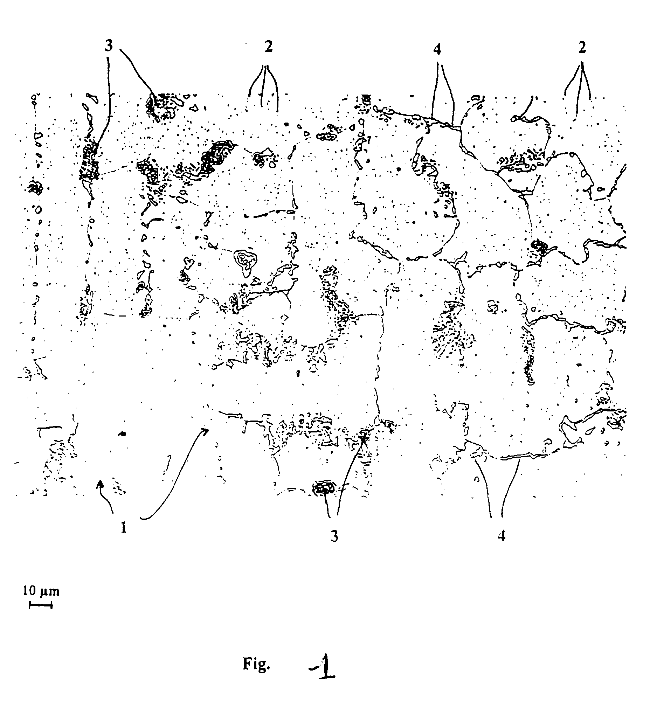

L'invention est illustrée par les exemples suivants ainsi que la figure unique qui représente une microphotographie de la structure d'un alliage selon l'invention.

### EXEMPLE 1

Par la technique de fusion inductive sous atmosphère inerte (notamment argon) on prépare une charge fondue de la composition suivante que l'on met ensuite en forme par simple coulée en moule de sable :

| | | |
|---|---|---|
| | Cr | 29,0 % |
| | Ni | 8,53 % |
| | C | 0,38 % |
| | W | 5,77 % |
| | Ta | 2,95 % |
| Résiduels | Fe | < 3 % |
| | Si | < 1 % |
| | Mn | <0,5 % |
| | Zr | <0,1 % |
| | autres sommés | < 1 % |

le reste étant constitué par du cobalt.

La coulée est suivie par un traitement thermique comportant une phase de mise en solution pendant 2 heures à 1200°C et une phase de précipitation des carbures secondaires pendant 10 heures à 1000°C, chacun de ces paliers finissant par un refroidissement à l'air jusqu'à la température ambiante.

La microstructure de l'alliage obtenu, révélée par microscopie optique ou électronique, suivant les techniques métallographiques classiques et éventuellement microanalyse X, est composée d'une matrice de cobalt stabilisée en structure cubique face centrée par la présence du nickel, comportant divers éléments en solution solide : Cr, Ta, W, ainsi que différents carbures présents à l'intérieur des grains et aux joints de grains. Cette structure est visible sur la figure unique : les joints de grains qui n'apparaissent pas sur la microphotographie avec le grossissement utilisé ont été figurés par les lignes 1 en trait fin. A l'intérieur des grains délimités par les joints 1, la phase intragranulaire est constituée de carbures secondaires 2 fins de type (Cr,W)₂₃C₆ précipités de façon régulière dans la matrice qui apparaissent sous la forme de petits points. Aux joints de grains, on trouve une phase interg anulaire dense mais discontinue composée de carbures (Cr,W)₂₃C₆ eutectiques 3 qui apparaissent en sombre et de carbures de tantale TaC 4 qui apparaissent sous la forme de petits îlots clairs bien distincts les uns des autres.

Avec un rapport molaire du tantale par rapport au carbone dans la composition de l'alliage égal à 0,51, la phase intergranulaire est composée pour environ 50 % en volume de carbures 3 de chrome et de tungstène et environ 50 % de carbures 4 de tantale.

Les propriétés de résistance mécanique à haute température de l'alliage ont été évaluées dans les trois tests suivants
- mesure de la contrainte (en MPa) à rupture en traction à 900°C sur une éprouvette cylindrique d'une longueur totale de 40 mm comportant deux extrémités de fixation à la machine de traction longues chacune de 9 mm et une partie intermédiaire utile de 4 mm de diamètre et 22 mm de longueur, avec une vitesse de traction de 2 mm/min ;
- mesure de l'allongement (en %) à rupture en traction à 900°C dans les conditions ci-dessus ;
- mesure de la tenue (en heures) en fluage à 1050°C sous 35 MPa sur une éprouvette cylindrique d'une longueur totale de 80 mm comportant deux extrémités de fixation longues chacune de 17,5 mm et une partie intermédiaire utile de 6,4 mm de diamètre et 45 mm de longueur.

Les propriétés de résistance à l'oxydation à l'air et à la corrosion par le verre ont été évaluées dans un test consistant à faire tourner une éprouvette cylindrique de 10 mm de diamètre et 100 mm de long, à moitié immergée dans un bain de verre fondu du type ci-dessous à 1080°C pendant 125 heures. Le résultat est donné par la profondeur (en mm) de la zone érodée à la hauteur du point triple éprouvette-verre fondu-air chaud. La composition du verre est approximativement la suivante (en parties en poids) :

| | | | | | | | | |
|---|---|---|---|---|---|---|---|---|
| SiO₂ | Al₂O3 | Fe₂O₃ | CaO | MgO | Na₂O | K₂O | B₂O₃ | SO₃ |
| 64,7 | 3,4 | 0,17 | 7,2 | 3 | 15,8 | 1 | 4,5 | 0,25 |

Les résultats sont rassemblés dans le tableau 1 ci-après.

La capacité de cet alliage à être utilisé pour constituer un outillage de mise en forme du verre fondu a été évaluée dans l'application à la fabrication de laine de verre. Une assiette de fibrage de 400 mm de diamètre de forme classique a été fabriquée par coulée et traitement thermique comme ci-dessus, puis utilisée dans des conditions industrielles pour fibrer un premier verre à la température de 1080°C.

L'assiette est utilisée jusqu'à ce que son arrêt soit décidé suite à la ruine de l'assiette déclarée par une détérioration visible ou par une qualité de fibre produite devenue insuffisamment bonne. La durée de vie (en heures) de l'assiette ainsi mesurée est de 540 heures.

Dans les mêmes conditions, la durée de vie d'une assiette de fibrage en un superalliage à base de nickel est de 150 h, pour un alliage à base de nickel suivant le brevet FR-A-2 536 385 de la composition suivante, ayant subi le même traitement thermique de précipitation de carbures que celui de l'exemple 1 :

| | |
|---|---|
| Ni | 54,5 à 58 % en poids |
| Cr | 27,5 à 28,5 % |
| W | 7,2 à 7,6 % |
| C | 0,69 à 0,73 % |
| Si | 0,6 à 0,9 % |
| Mn | 0,6 à 0,9 % |
| Fe | 7 à 10 % |
| Co | < 0,2 % |

La microstructure de cet alliage est composée d'une matrice de nickel comportant des carbures de type M₂₃C₆=(W,Cr)₂₃C₆ répartis de façon homogène dans la matrice en formant une phase intergranulaire continue.

L'alliage de l'exemple 1 permet notamment grâce à son excellente tenue au fluage et à sa très bonne résistance à la corrosion une augmentation conséquente de la durée de vie de l'assiette, multipliée d'un facteur 3,6 par rapport à l'alliage classique.

### EXEMPLE 2

On prépare comme à l'exemple 1 et on évalue de la même façon les propriétés d'un autre alliage selon l'invention de la composition suivante :

| | | |
|---|---|---|
| | Cr | 28,2 % |
| | Ni | 8,60 % |
| | C | 0,22 % |
| | W | 5,71 % |
| | Ta | 3,04 % |
| résiduels | Fe | <3 % |
| | Si | <1 % |
| | Mn | <0,5 % |
| | Zr | <0,1 % |
| | autres sommés | <1 % |

le reste étant constitué par du cobalt.

Sa microstructure se distingue de celle de l'exemple 1 par des phases intergranulaires toujours discontinues mais moins denses, en raison de la plus faible teneur en carbone, et constituées principalement de carbures de tantale TaC (rapport molaire Ta/C = 0,91).

Les résultats des essais de tenue mécanique et à la corrosion figurent dans le tableau 1.

Cet alliage est remarquable surtout par ses propriétés mécaniques, en particulier une très grande ductilité à chaud reflétée par l'allongement à rupture à 900°C, et une résistance en fluage très honorable, décuplée par rapport à un alliage usuel à base de nickel.

Sa capacité à résister au choc thermique en fait un matériau avantageux pour constituer des assiettes de fibrage pour la fabrication de laine de verre, comme en témoigne un essai de fibrage en conditions industrielles : en dépit de la tendance à la corrosion de l'alliage de l'exemple 2, la durée de vie de l'assiette est d'environ 720 heures. La fragilisation résultant de l'attaque par le verre a été compensée par les bonnes propriétés mécaniques de l'alliage. Dans les mêmes conditions (différentes de celles de l'exemple 1), la durée de vie d'une assiette en superalliage à base de nickel classique indiqué à l'exemple 1 n'est que de 250 h.

**TABLEAU 1**

| | **EX. 1** | **EX. 2** |
|---|---|---|
| contrainte à rupture en traction à 900°C (MPa) | 287 | 247 |
| allongement à rupture en traction à 900°C (%) | 34 | 38 |
| tenue en fluage à 1050°C sous 35 MPa (h) | 954 | 335 |
| profondeur de la zone érodée en bain de verre fondu (mm) | 0,0 | 0,6 |

### EXEMPLES COMPARATIFS 1 à 9

D'autres alliages ont été élaborés à titre comparatif en choisissant des teneurs en les éléments constitutifs en dehors des gammes caractéristiques de l'invention. Leurs compositions sont reportées dans le tableau 2 : pour chaque alliage, on a souligné la ou les teneurs non conformes à l'invention.

**TABLEAU 2**

| | Co | Ni | C | Cr | W | Ta |
|---|---|---|---|---|---|---|
| EX. COMP. 1 | 0 | base | 0,44 | 30,1 | 4,65 | 3,37 |
| EX. COMP. 2 | base | 8,23 | 0,19 | 30,0 | 5,78 | 1,85 |
| EX. COMP. 3 | base | 8,86 | 0,98 | 29,0 | 0,0 | 2,87 |
| EX. COMP. 4 | base | 8,45 | 0,39 | 29,7 | 2,94 | 0,02 |
| EX. COMP. 5 | base | 8,74 | 0,37 | 28,2 | 5,59 | 5,84 |
| EX. COMP. 6 | base | 8,14 | 0,33 | 25,7 | 5,97 | 4,17 |
| EX. COMP. 7 | base | 9,16 | 0,38 | 39,9 | 6,34 | 2,62 |
| EX. COMP. 8 | base | 7,58 | 0,35 | 29,1 | 3,06 | 3,80 |
| EX. COMP. 9 | base | 7,96 | 0,34 | 29,2 | 8,87 | 2,88 |

L'alliage de l'exemple comparatif 1 ne diffère d'un alliage selon l'invention que par sa matrice qui est de nickel au lieu d'être constituée de cobalt. Bien que le mode de renforcement soit le même que pour un alliage selon l'invention (teneur en carbone et rapport Ta/C conforme à l'invention), cet alliage a une tenue au fluage 30 fois moindre et une ductilité plus faible (avec un allongement à la rupture 3 fois moindre) que l'alliage selon l'invention.

L'alliage de l'exemple comparatif 2 a une tenue au fluage de seulement 74 heures dans les conditions spécifiées plus haut, et présente une très forte tendance à la corrosion avec une zone érodée profonde de 0,83 mm dans l'essai à l'éprouvette tournante. Ce mauvais comportement s'explique par la teneur un peu faible en carbone et trop faible en tantale qui conduit à une faible densité de carbures M₂₃C₆ et TaC procurant un renfort intergranulaire et intragranulaire insuffisant et à une trop faible disponibilité du chrome aux joints de grains et limitant la vitesse de diffusion des atomes de chrome vers le front de corrosion.

L'alliage de l'exemple comparatif 3 présente également une très forte tendance à la corrosion avec une zone érodée profonde de 0,80 mm, malgré sa teneur élevée en carbone. La caractérisation de la microstructure de l'alliage a montré l'existence d'un réseau intergranulaire très dense et continu de carbures, constitué à 80% de carbures de chrome et à 20% de carbures de tantale. Comme le superalliage à base de nickel discuté dans l'exemple 1, cet alliage est pénalisé par sa teneur trop élevée en carbone et est moins performant que l'alliage selon l'invention renforcé par une phase intergranulaire non continue de carbures. En outre, en l'absence totale de tungstène, les carbures de chrome sont moins résistants à haute température que les carbures eutectiques (Cr,W)₂₃C₆, d'où une plus grande faiblesse mécanique à haute température.

L'alliage de l'exemple comparatif 4 a une tenue au fluage médiocre de l'ordre de 200 heures avec une tendance sensible à la corrosion (profondeur d'érosion de 0,33 mm). Cet exemple illustre l'importance des carbures de tantale dans la résistance mécanique et à la corrosion. En effet cet alliage se caractérise par une quasi absence de tantale, qui conduit à la précipitation exclusive de carbures de chrome. La réduction des performances mécaniques à haute température, due au défaut des carbures de tantale plus réfractaires et aussi à la teneur relativement faible en tungstène, ne permet pas de compenser la faiblesse vis à vis de la corrosion et rend le matériau incompatible avec des utilisations à haute température en milieu corrosif (contrairement à l'alliage de l'exemple 2 qui compense la tendance à la corrosion par d'excellentes propriétés mécaniques à haute température).

L'alliage de l'exemple comparatif 5 a une microstructure présentant une précipitation intergranulaire dense et homogène constituée exclusivement de carbures de tantale, due à la très haute teneur en tantale et au rapport molaire Ta/C supérieur à 1. La totalité du chrome étant de ce fait en solution solide dans la matrice, la couche protectrice d'oxyde de chrome ne se forme pas dans de bonnes conditions, apparemment suite à une diffusion trop lente du chrome matriciel, d'où une érosion sensible au test de corrosion.

L'alliage de l'exemple comparatif 6 est lui aussi très sensible à la corrosion avec une zone érodée profonde de 2,50 mm au test à l'éprouvette tournante. Cette fois, c'est la trop faible teneur en chrome qui est responsable de ce comportement, en ce sens qu'elle n'est pas suffisante pour assurer la formation et le maintien de la couche superficielle de Cr₂O₃. En outre, la teneur en tantale relativement élevée ne favorise pas la formation d'une quantité suffisante de carbures de chrome intergranulaires.

L'alliage de l'exemple comparatif 7 a lui une trop forte teneur en chrome qui fait basculer sa microstructure de solidification dans un système métallurgique différent des autres alliages avec une précipitation secondaire sous forme de précipités aciculaires et un réseau intergranulaire dense constitué de carbures de chrome et de composés du chrome. Il présente de ce fait une rigidité trop importante reflétée par un allongement à la rupture de seulement 1,5%.

L'alliage de l'exemple comparatif 8 a une contrainte à rupture en traction à 900°C de 257 MPa et une tenue au fluage d'environ 300 heures avec une certaine tendance à la corrosion (profondeur d'érosion 0,40 mm). La densité des carbures étant fixée par la teneur en carbone, la faible teneur en tungstène de cet alliage se traduit par un taux de durcissement en solution solide plus faible, d'où la faible résistance mécanique en traction à chaud et en fluage.

L'alliage de l'exemple comparatif 9 a une très forte tendance à la corrosion avec une profondeur d'érosion de 1,50 mm au test de corrosion. La trop grande présence de tungstène dans la composition conduit à une modification importante du matériau à haute température par oxydation du tungstène sous forme de composés volatils de type WO₃, responsable de la dégradation du comportement en corrosion.

Comme le montrent les exemples précédents, la bonne résistance mécanique à haute température en présence d'un milieu corrosif des alliages selon l'invention, obtenue par une sélection soignée des teneurs notamment en chrome, tungstène et surtout carbone et tantale, est le résultat de la combinaison suivante : renfort des joints de grains dû aux carbures de tantale et éventuellement aux carbures de chrome et de tungstène intergranulaires ; blocage de la fissuration par la dispersion discontinue d'une quantité limitée de carbures de chrome et de tungstène intergranulaires ; blocage de la pénétration du milieu corrosif par la présence de carbures de tantale; disponibilité de chrome sous forme précipitée.

L'invention qui a été décrite dans le cas plus particulier de la mise en forme du verre fondu n'est nullement limitée à cette application spécifique et concerne généralement tous les domaines où l'on exige des matériaux une bonne résistance à haute température.

## Revendications

1. Alliage à base de cobalt doué de résistance mécanique à haute température, en particulier en milieu oxydant ou corrosif, comprenant essentiellement les éléments suivants, les proportions étant indiquées en pourcentage pondéral de l'alliage :
| | |
|---|---|
| Cr | 26 à 34 % |
| Ni | 6 à 12 % |
| W | 4 à 8 % |
| Ta | 2 à 4 % |
| C | 0,2 à 0,5 % |
| Fe | moins de 3 % |
| Si | moins de 1 % |
| Mn | moins de 0,5% |
| Zr | moins de 0,1% |
le reste étant constitué par du cobalt et des impuretés inévitables,
le rapport molaire du tantale par rapport au carbone étant de l'ordre de 0,4 à 1.

2. Alliage selon la revendication 1, dans lequel les proportions des éléments sont dans les gammes suivantes :
| | |
|---|---|
| Cr | 28 à 32 % |
| Ni | 8 à 10 % |
| W | 5 à 7 % |
| Ta | 2,5 à 3,5 % |
| C | 0,3 à 0,45 % |

3. Alliage selon la revendication 1 ou 2, dans lequel le rapport molaire du tantale par rapport au carbone est de l'ordre de 0,45 à 0,9.

4. Alliage selon la revendication 3, dans lequel les éléments sont dans des proportions de l'ordre de :
| | |
|---|---|
| Cr | 29 % |
| Ni | 8,5 % |
| C | 0,38% |
| W | 5,7 % |
| Ta | 2,9 % |

5. Alliage selon la revendication 1, dans lequel les éléments sont dans des proportions de l'ordre de :
| | |
|---|---|
| Cr | 28 % |
| Ni | 8,5 % |
| C | 0,22 % |
| W | 5,7 % |
| Ta | 3 % |

6. Alliage selon l'une quelconque des revendications 1 à 5, **caractérisé en ce qu'**il présente une phase intergranulaire de carbures discontinue.

7. Article, notamment article utilisable notamment pour l'élaboration ou la transformation à chaud du verre, réalisé en un alliage selon l'une quelconque des revendications précédentes, notamment par fonderie.

8. Article selon la revendication 7, obtenu par fonderie et ayant subi un traitement thermique après coulée de l'alliage.

9. Article selon l'une quelconque des revendications 7 à 8 consistant en une assiette de fibrage pour la fabrication de laine minérale.

10. Procédé de fabrication d'un article selon la revendication 8 comprenant la coulée de l'alliage fondu dans un moule approprié, et un traitement thermique de l'article moulé comprenant un premier recuit à une température de 1100 à 1250°C et un second recuit à une température de 850 à 1050°C.

## Patentansprüche

1. Cobaltbasislegierung, die insbesondere in oxidierender oder korrosiver Umgebung hochwarmfest ist und im Wesentlichen die in Gewichtsprozent angegebenen Elemente mit folgenden Anteilen umfasst:
| | |
|---|---|
| Cr | 26 bis 34 % |
| Ni | 6 bis 12 % |
| W | 4 bis 8 % |
| Ta | 2 bis 4 % |
| C | 0,2 bis 0,5 % |
| Fe | unter 3 % |
| Si | unter 1 % |
| Mn | unter 0,5 % |
| Zr | unter 0,1 %, |
wobei der Rest aus Cobalt und unvermeidlichen Verunreinigungen besteht und das Molverhältnis von Tantal zu Kohlenstoff etwa 0,4 bis 1 beträgt.

2. Legierung nach Anspruch 1, bei welcher die Anteile der Elemente innerhalb folgender Bereiche liegen:
| | |
|---|---|
| Cr | 28 bis 32 % |
| Ni | 8 bis 10 % |
| W | 5 bis 7 % |
| Ta | 2,5 bis 3,5 % |
| C | 0,3 bis 0,45 %. |

3. Legierung nach Anspruch 1 oder 2, bei welcher das Molverhältnis von Tantal zu Kohlenstoff etwa 0,45 bis 0,9 beträgt.

4. Legierung nach Anspruch 3, bei welcher die Elemente mit Anteilen von etwa:
| | |
|---|---|
| Cr | 29 % |
| Ni | 8,5 % |
| C | 0,38 % |
| W | 5,7 % |
| Ta | 2,9 % |
vorliegen.

5. Legierung nach Anspruch 1, bei welcher die Elemente mit Anteilen von etwa:
| | |
|---|---|
| Cr | 28 % |
| Ni | 8,5 % |
| C | 0,22 % |
| W | 5,7 % |
| Ta | 3 % |
vorliegen.

6. Legierung nach einem der Ansprüche 1 bis 5, **dadurch gekennzeichnet, dass** sie eine diskontinuierliche interkristalline Carbidphase aufweist.

7. Erzeugnis, insbesondere Erzeugnis, das speziell für die Fabrikation oder Bearbeitung von Glas in der Hitze verwendbar und aus einer Legierung nach einem der vorhergehenden Ansprüche insbesondere durch Gießen hergestellt ist.

8. Erzeugnis nach Anspruch 7, das durch Gießen hergestellt und nach Gießen der Legierung einer Wärmebehandlung unterzogen worden ist.

9. Erzeugnis nach Anspruch 7 oder 8, das aus einem Spinnteller zur Herstellung von Mineralwolle besteht.

10. Verfahren zur Herstellung eines Erzeugnisses nach Anspruch 8, welches das Gießen der geschmolzenen Legierung in eine geeignete Form und eine Wärmebehandlung des gegossenen Erzeugnisses umfasst, die einen ersten Glühvorgang bei einer Temperatur von 1 100 bis 1 250 °C und einen zweiten Glühvorgang bei einer Temperatur von 850 bis 1 050 °C beinhaltet.

## Claims

1. Cobalt-based alloy having mechanical strength at high temperature, in particular in an oxidising or corrosive environment, substantially comprising the following elements, the proportions being shown in wt.% of the alloy:
| | |
|---|---|
| Cr | 26 to 34 % |
| Ni | 6 to 12 % |
| W | 4 to 8 % |
| Ta | 2 to 4 % |
| C | 0.2 to 0.5 % |
| Fe | below 3 % |
| Si | below 1 % |
| Mn | below 0.5 % |
| Zr | below 0.1 % |
the remainder being constituted by cobalt and unavoidable impurities, the molar ratio of the tantalum to the carbon being about 0.4 to 1.

2. Alloy according to claim 1, wherein the proportions of the elements are in the following ranges:
| | |
|---|---|
| Cr | 28 to 32 % |
| Ni | 8 to 10 % |
| W | 5 to 7 % |
| Ta | 2.5 to 3.5 % |
| C | 0.3 to 0.45 % |

3. Alloy according to claim 1 or 2, wherein the molar ratio of the tantalum to the carbon is about 0.45 to 0.9.

4. Alloy according to claim 3, wherein the elements are in proportions of about:
| | |
|---|---|
| Cr | 29 % |
| Ni | 8.5 % |
| C | 0.38 % |
| W | 5.7 % |
| Ta | 2.9 % |

5. Alloy according to claim 1, wherein the elements are in proportions of about:
| | |
|---|---|
| Cr | 28 % |
| Ni | 8.5 % |
| C | 0.22 % |
| W | 5.7 % |
| Ta | 3 % |

6. Alloy according to any one of claims 1 to 5, **characterised in that** it has a discontinuous intergranular carbide phase.

7. Article, in particular an article which can be used in particular for hot preparation or transformation of glass, produced from an alloy according to any one of the preceding claims, in particular by founding.

8. Article according to claim 7, obtained by founding and having been subjected to a heat treatment after the alloy has been cast.

9. Article according to any one of claims 7 to 8, consisting of a fibre drawing plate for the production of mineral wool.

10. Process for producing an article according to claim 8 comprising the casting of the molten alloy in an appropriate mould and a heat treatment of the moulded article comprising a first annealing at a temperature of 1,100 to 1,250°C and a second annealing at a temperature of 850 to 1,050°C.
